(19) Europäisches Patentamt / European Patent Office / Office européen des brevets

(11) **EP 1 749 222 B1**

(12) **EUROPÄISCHE PATENTSCHRIFT**

(45) Veröffentlichungstag und Bekanntmachung des Hinweises auf die Patenterteilung:
**01.08.2007 Patentblatt 2007/31**

(21) Anmeldenummer: **05755627.6**

(22) Anmeldetag: **23.05.2005**

(51) Int Cl.:
**G02B 5/08** *(2006.01)*

(86) Internationale Anmeldenummer:
**PCT/DE2005/000941**

(87) Internationale Veröffentlichungsnummer:
**WO 2005/114266 (01.12.2005 Gazette 2005/48)**

(54) **HOCHREFLEKTIERENDER DIELEKTRISCHER SPIEGEL UND VERFAHREN ZU DESSEN HERSTELLUNG**

HIGH-REFLECTING DIELECTRIC MIRROR AND METHOD FOR THE PRODUCTION THEREOF

MIROIR DIELECTRIQUE A HAUTE REFLEXION ET SON PROCEDE DE PRODUCTION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **24.05.2004 DE 102004025646**

(43) Veröffentlichungstag der Anmeldung:
**07.02.2007 Patentblatt 2007/06**

(73) Patentinhaber: **JENOPTIK Laser, Optik, Systeme GmbH**
**07745 Jena (DE)**

(72) Erfinder:
• **BERNITZKI, Helmut**
**07747 Jena (DE)**
• **FASOLD, Dieter**
**07745 Jena (DE)**
• **KLAUS, Michael**
**07743 Jena (DE)**
• **LAUX, Sven**
**06632 Freyburg (DE)**

(74) Vertreter: **Bertram, Helmut et al**
**Patentanwälte**
**OEHMKE & KOLLEGEN**
**Neugasse 13**
**07743 Jena (DE)**

(56) Entgegenhaltungen:
**WO-A-02/086579**

• **PATENT ABSTRACTS OF JAPAN Bd. 1997, Nr. 02, 28. Februar 1997 (1997-02-28) & JP 08 254612 A (CANON INC), 1. Oktober 1996 (1996-10-01)**
• **PATENT ABSTRACTS OF JAPAN Bd. 014, Nr. 454 (M-1031), 28. September 1990 (1990-09-28) & JP 02 182447 A (MITSUBISHI ELECTRIC CORP), 17. Juli 1990 (1990-07-17)**
• **PATENT ABSTRACTS OF JAPAN Bd. 003, Nr. 074 (E-119), 26. Juni 1979 (1979-06-26) -& JP 54 053549 A (CANON INC), 26. April 1979 (1979-04-26)**

EP 1 749 222 B1

**Beschreibung**

Die Erfindung bezieht sich auf einen hochreflektierenden dielektrischen Spiegel, der auf einem optischen Substrat eine Folge von alternierenden hoch- und niedrigbrechenden dielektrischen Schichten aufweist, deren optische Schichtdicken einen Spiegel bei einer vorgegebenen Wellenlänge ergeben. Ferner bezieht sich die Erfindung auf ein Verfahren zur Herstellung hochreflektierender dielektrischer Spiegel.

Die erfindungsgemäßen Spiegel basieren vorzugsweise auf kostengünstigem Quarzglassubstrat und sind für jeweils ausgewählte Wellenlängen im ultravioletten Wellenlängenbereich von 170 nm - 230 nm, insbesondere 190 nm - 200 nm, bei Einfallswinkeln im Bereich zwischen 0° bis 75° verwendbar.

Für den DUV-Spektralbereich ausgelegte hochreflektierende Spiegel weisen auf einem Substrat entweder ein rein dielektrisches Schichtensystem von übereinander alternierend angeordneten hoch- und niedrigbrechenden dielektrischen Schichten auf (z. B. EP 0 372 438 A2) oder auf dem Substrat wird z. B. gemäß der EP 0 280 299 B1 eine, durch einen dielektrischen Schichtenaufbau geschützte Metallschicht (vorzugsweise Aluminium) abgeschieden, deren optische Eigenschaften durch den dielektrischen Schichtenaufbau außerdem an eine jeweilige Anwendung angepasst werden können.

JP 8 254 612 A offenbart ein Verfahren zur Herstellung hochreflektierender dielektrischer Spiegel aus alternierenden hochbrechenden $TiO_2$ und niedrigbrechenden $MgF_2$ dielektrischen Schichten auf einem optischen Substrat. In jeder hochbrechenden $TiO_2$ Schicht sind Druckspannungen vorhanden, die zur Kompensation von Zugspannungen in der benachbarten $MgF_2$ Schicht dienen.

JP 2 182 447 A offenbart einen hochreflektierenden dielektrischen Spiegel, der eine hohe Laserfestigkeit im Wellenlängenbereich rund um 248 nm aufweist. Der Spiegel besteht aus alternierenden $Al_2O_3$ und $SiO_2$ Schichten mit einer Oberbeschichtung aus $MgF_2$.

Bekannte, rein dielektrische Schichtensysteme weisen gegenüber einer Metallschichtvariante eine höhere Laserfestigkeit auf und enthalten entweder Fluoridschichten (z.B. $LaF_3/MgF_2$ oder $GdF_3/AlF_3$) oder oxidische Schichten ($Al_2O_3/SiO_2$). Vorteil der oxidischen Schichten ist deren geringe Streuung und die gute Haftung auf kostengünstigem Quarzglas. Nachteilig gegenüber Fluoridschichten ist die hohe Absorption im betreffenden Spektralbereich sowie eine geringere Laserfestigkeit.

Von Nachteil bei den fluoridischen Systemen ist eine meist nicht ausreichende Reflektivität durch relativ hohe, mit der Schichtenanzahl stetig zunehmende Streuverluste sowie die ungenügende Stabilität auf verschiedenen optischen Substraten. Letztere liegt darin begründet, dass sich fluoridische Systeme z. B. auf Quarzglas, im Unterschied zu $CaF_2$ als Substrat, mit Vakuumbedampfung nicht ohne störende Zugspannungen aufbringen lassen.

Ungeachtet dieser Nachteile werden in der US 6 574 039 B1 für einen hochreflektierenden Spiegel niedrigbrechende $MgF_2$-Schichten und hochbrechende $Al_2O_3$-Schichten alternierend als dielektrisches Schichtensystem vorgesehen, wobei $MgF_2$ direkt auf das $SiO_2$-Substrat aufgebracht wird. Infolge der hohen Absorption des zuoberst liegenden $Al_2O_3$ ist die Laserfestigkeit des derart aufgebauten Reflexionselementes beeinträchtigt.

Ausgehend hiervon ist es Aufgabe der Erfindung, die eingangs mit den genannten Arten der dielektrischen Schichten in Verbindung stehenden Probleme zu beheben.

Bei einer verbesserten Haftung, insbesondere auf einem kostengünstigen optischen Substrat, soll eine Rissbildung in den dielektrischen Schichten vermieden, die Laserfestigkeit bei ausgewählten Wellenlängen in einem Wellenlängenbereich von 170 nm bis 230 nm erhöht und Verluste minimiert werden.

Erfindungsgemäß wird diese Aufgabe bei dem hochreflektierenden dielektrischen Spiegel der eingangs genannten Art dadurch erreicht, dass die dielektrischen Schichten in einen ersten Stapel von alternierenden hoch- und niedrigbrechenden oxidischen Schichten und einen zweiten Stapel von alternierenden hoch- und niedrigbrechenden fluoridischen Schichten unterteilt sind, von denen der erste Stapel auf dem optischen Substrat und der zweite Stapel auf dem ersten Stapel aufgebracht ist, und dass sowohl in den hoch- als auch in den niedrigbrechenden Schichten des ersten Stapels Druckspannungen vorhanden sind, die zur Kompensation von Zugspannungen in den fluoridischen Schichten dienen.

Mit anderen Worten können gemäß der Erfindung nach Anspruch 1 dielektrische Spiegel für Wellenlängen von 170 nm bis 230 nm dadurch bereitgestellt werden, dass dielektrische, oxidische und fluoridische Schichten, jeweils für sich übereinander geschichtet, eine Gruppe oxidischer und eine Gruppe fluoridischer Schichten bilden, wobei die Gruppe der fluoridischen Schichten auf die Gruppe der oxidischen Schichten geschichtet wird. Die oxidischen Schichten minimieren durch ihre glatte Oberfläche Streuverluste und dienen als Haftgrundlage zum optischen Substrat (z. B. Quarzglassubstrat).

Besonders zweckmäßige und vorteilhafte Ausgestaltungen und Weiterbildungen der Erfindung ergeben sich aus den abhängigen Ansprüchen.

Der fluoridische Stapel bzw. die Gruppe der fluoridischen Schichten hält die Absorption des erfindungsgemäßen Spiegels gering, da die von den fluoridischen Schichten bereits oberflächlich reflektierte Strahlungsenergie nur zu einem geringen Teil bis in die stärker absorbierend wirkenden oxidischen Schichten vordringt. Zum Erreichen einer gewünschten hohen Reflexion werden wesentlich weniger fluoridische Schichten als bei einem rein fluoridischen System benötigt, wodurch Streuverluste verringert werden.

Von besonderem Vorteil ist vor allem auch, dass mittels der erfindungsgemäßen Gruppierung und der Abfolge der beiden Schichtensysteme auf dem Substrat ein Spiegel hergestellt werden kann, der eine hohe Laserfestigkeit bei vorgegebenen Wellenlängen im Wellenlängenbereich von 170 nm bis 230 nm aufweist.

Gegenstand der Erfindung ist ferner ein Verfahren nach Anspruch 6 zur Herstellung hochreflektierender dielektrischer Spiegel durch Abscheiden einer Folge von alternierenden hoch- und niedrigbrechenden dielektrischen Schichten auf einem optischen Substrat, deren optische Schichtdicken einen Spiegel bei einer vorgegebenen Wellenlänge ergeben. Erfindungsgemäß wird für die Reflexion von ausgewählten Wellenlängen im Bereich von 170 nm bis 230 nm zunächst ein erster Stapel von alternierenden hoch- und niedrigbrechenden oxidischen Schichten auf dem optischen Substrat abgeschieden, auf dem danach ein zweiter Stapel von alternierenden hoch- und niedrigbrechenden fluoridischen Schichten aufgebracht wird, wobei in dem ersten Stapel beim Abscheiden der . Schichten dauerhaft verbleibende Druckspannungen in einer Größe erzeugt werden, die für eine Kompensation von Zugspannungen in den fluoridischen Schichten geeignet ist.

Bevorzugt wird das erfindungsgemäße Verfahren derart ausgeführt, dass die Größe der Druckspannungen durch einen gesteuerten Ionenbeschuss des für die oxidischen Schichten vorgesehenen Materials beim Vakuumbedampfen des Substrats erzeugt wird.

Durch eine geeignete Wahl der Herstellungsbedingungen für das zum Abscheiden der oxidischen Schichten auf dem Substrat verwendete ionenunterstützte Bedampfen werden somit die in den oxidischen Schichten zur Kompensation der Zugspannungen in den fluoridischen Schichten erforderlichen Druckspannungen in Abhängigkeit vom Verhältnis der oxidischen und fluoridischen Schichten zueinander erzeugt. Eine derartige Spannungskompensation wirkt sich besonders vorteilhaft auf die Langzeitstabilität des Spiegels aus, da dem ansonsten bei den fluoridischen Schichten vorhandenen Bestreben zur Rissbildung entgegengewirkt wird.

Nachstehend soll die Erfindung anhand der schematischen Zeichnung näher erläutert werden. Es zeigen:

Fig. 1 ein erfindungsgemäßes dielektrisches Schichtensystem für einen hochreflektierenden Spiegel

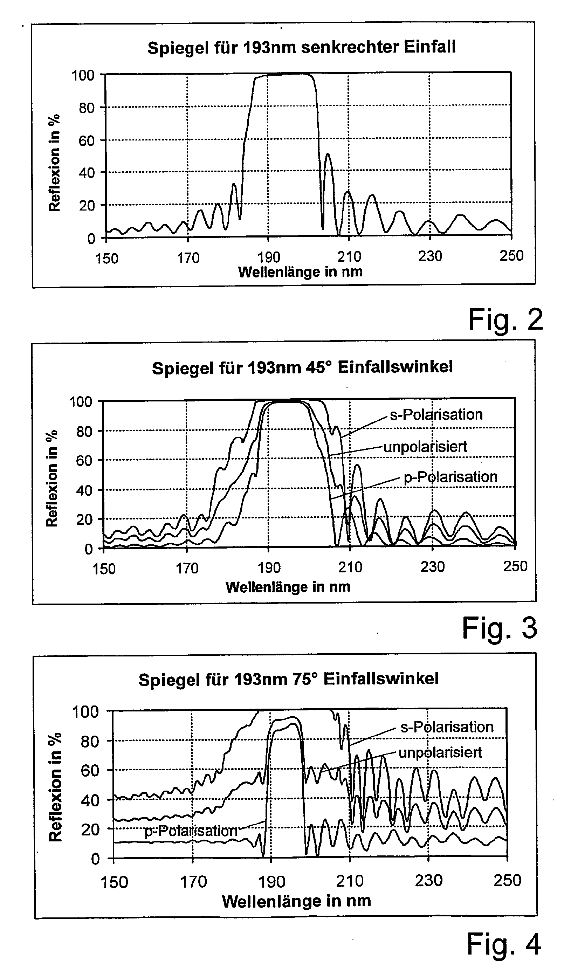

Fig. 2 den Reflexionsverlauf für einen erfindungsgemäßen Spiegel bei 193 nm und senkrechtem Strahlungseinfall

Fig. 3 den Reflexionsverlauf für einen erfindungsgemäßen Spiegel für verschiedene Polarisationen bei 193 nm und einem Einfallswinkel von 45°

Fig. 4 den Reflexionsverlauf für einen erfindungsgemäßen Spiegel für verschiedene Polarisationen bei 193 nm und einem Einfallswinkel von 75°

Fig. 5 Brechzahlen der verwendeten oxidischen und fluoridischen dielektrischen Schichten im Wellenlängenbereich von 170 nm bis 230 nm

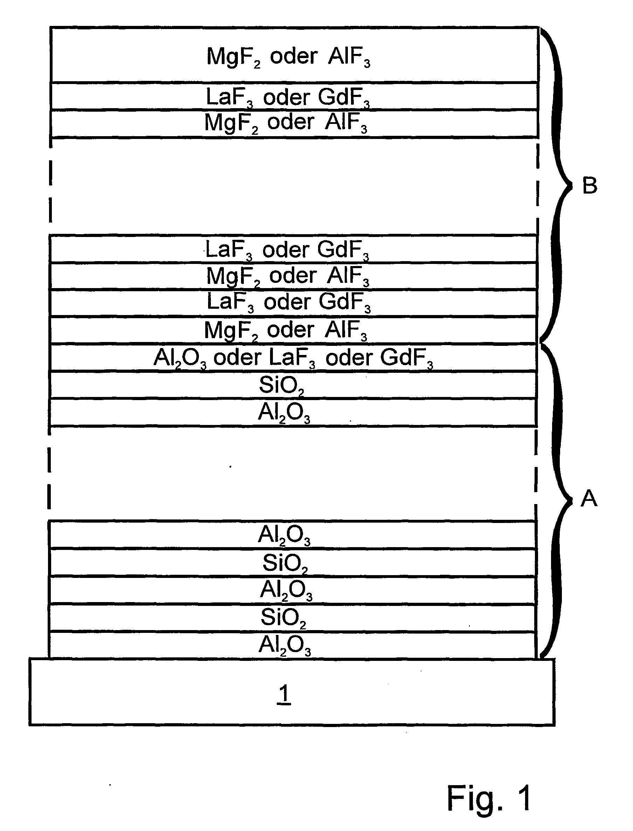

Das hochreflektierende dielektrische Schichtensystem gemäß Fig. 1 besteht erfindungsgemäß aus einem ersten Stapel A von 30 - 61 alternierenden hoch- und niedrigbrechenden oxidischen Schichten, die mittels ionenunterstütztem Bedampfen auf einem Quarzglas-Substrat 1 aufgebracht sind und einem auf dem ersten Stapel A aufgedampften zweiten Stapel B von 10 - 31 alternierenden hoch- und niedrigbrechenden fluoridischen Schichten. Die Anzahl der Schichten ist von der Wellenlänge der zu reflektierenden Strahlung und den Herstellungsbedingungen bei der Bedampfung abhängig.

Als oxidische Materialien dienen bevorzugt hochbrechendes Aluminiumoxid ($Al_2O_3$) und niedrigbrechendes Siliziumoxid ($SiO_2$). Geeignete fluoridische Materialien sind z. B. hochbrechendes Lanthanfluorid ($LaF_3$) oder Gadoliniumfluorid ($GdF_3$) sowie niedrigbrechendes Magnesiumfluorid ($MgF_2$) oder Aluminiumfluorid ($AlF_3$). Der Übergang zwischen den beiden Stapeln A und B wird durch eine hochbrechende oxidische oder eine hochbrechende fluoridische Schicht gebildet. Eine niedrigbrechende fluoridische Abschlussschicht weist gegenüber den anderen fluoridischen Schichten eine doppelte optische Schichtdicke auf.

Der Fachmann wird hier erkennen, dass sich selbstverständlich auch andere fluoridische Materialien zum Aufbau des fluoridischen Stapels B eignen.

Ansonsten beträgt die optische Dicke der Schichten jeweils λ/4 der Anwendungswellenlänge λ. Es ist aber auch möglich, die optische Schichtdicke einer Schicht eines Schichtenpaares aus einer hoch- und einer niedrigbrechenden Schicht zu verringern, wenn eine optische Gesamtschichtdicke von λ/2 erhalten bleibt. Hierfür ist die optische Schichtdicke der jeweils anderen Schicht des Paares entsprechend zu vergrößern.

Diese Maßnahme ist besonders dafür geeignet, die Gesamtabsorption des erfindungsgemäßen Schichtensystems zu beeinflussen, insbesondere zu reduzieren, indem die für die Absorption vorwiegend maßgebliche Aluminiumoxidschicht in ihrer optischen Schichtdicke um bis zu 50% verringert wird.

Je nachdem für welchen Einfallswinkel $\Phi_0$ der zu reflektierenden Strahlung der erfindungsgemäße Spiegel eingesetzt werden soll, sind die optischen Schichtdicken mit einem Faktor $\dfrac{n}{\sqrt{n^2 - n_0^2 \sin^2 \Phi_0}}$ zu multiplizieren, in dem n die Brechzahl des jeweiligen Schichtenmaterials und n₀ die Brechzahl des umgebenden Mediums sind.

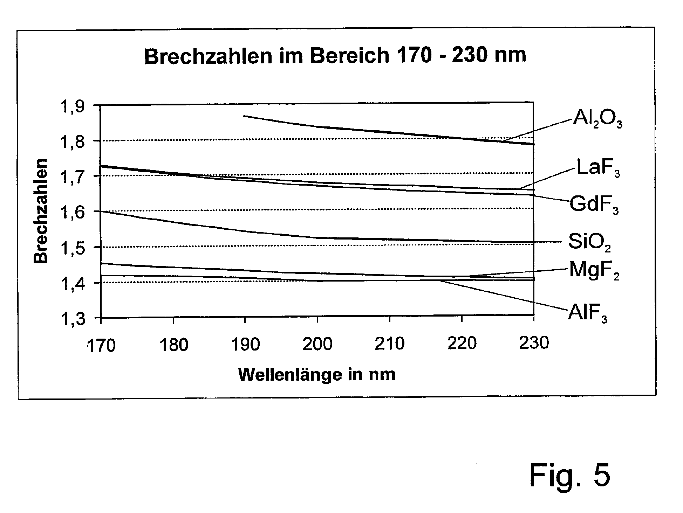

Die oberhalb von 1,40 liegenden Brechzahlen der verwendeten Materialien sind für den Wellenlängenbereich von 170 nm - 230 nm in Fig. 5 dargestellt.

Üblicherweise werden die erfindungsgemäßen Spiegel in einer Vakuumkammer durch Bedampfen im PVD-Verfahren hergestellt, wobei für die oxidischen Materialien eine Elektronenstrahlkanone verwendet wird und die Fluoride vorzugsweise aus einem Schiffchen verdampft werden.

Die Schichteneigenschaften können durch Einstellung der Beschichtungstemperatur und Beschichtungsrate, aber auch durch ein Vorheizen des Substrats beeinflusst werden. Vorrangig wird jedoch in Verbindung mit diesen Maßnahmen ein gesteuerter, großflächiger Ionenbeschuss, vorzugsweise mit Argonionen, dazu ausgenutzt, die für die Erfindung wesentlichen Druckspannungsverhältnisse in den oxidischen Schichten in einer Größe zu erzeugen, die zur Kompensation der beim Abscheiden in den fluoridischen Schichten entstehenden Zugspannungen geeignet ist. Hierfür ist lediglich eine geeignete Einstellung der Ionenquellen-Parameter im Verhältnis zur Einstellung der Beschichtungstemperatur und Beschichtungsrate erforderlich.

**Patentansprüche**

1. Hochreflektierender dielektrischer Spiegel, der auf einem optischen Substrat (1) eine Folge von alternierenden hoch- und niedrigbrechenden dielektrischen Schichten aufweist, deren optische Schichtdicken einen Spiegel bei vorgegebenen Wellenlängen ergeben, **dadurch gekennzeichnet, dass** die dielektrischen Schichten einen ersten Stapel (A) von alternierenden hoch- und niedrigbrechenden oxidischen Schichten und einen zweiten Stapel (B) von alternierenden hoch- und niedrigbrechenden fluoridischen Schichten bilden, von denen der erste Stapel (A) auf dem optischen Substrat (1) und der zweite Stapel (B) auf dem ersten Stapel (A) aufgebracht ist, und dass sowohl in den hoch- als auch in den niedrigbrechenden Schichten des ersten Stapels (A) Druckspannungen vorhanden sind, die zur Kompensation von Zugspannungen in den fluoridischen Schichten dienen.

2. Dielektrischer Spiegel nach Anspruch 1, **dadurch gekennzeichnet, dass** die oxidischen und die fluoridischen Schichten zur Reflexion ausgewählter Wellenlängen in einem Bereich von 170 nm - 230 nm ausgelegt sind.

3. Dielektrischer Spiegel nach Anspruch 2, **dadurch gekennzeichnet, dass** als optisches Substrat (1) Quarzglas dient, dass die hochbrechenden oxidischen Schichten aus Aluminiumoxid und die niedrigbrechenden oxidischen Schichten aus Siliziumdioxid bestehen, und dass die hochbrechenden fluoridischen Schichten aus Lanthanfluorid oder Gadoliniumfluorid und die niedrigbrechenden fluoridischen Schichten aus Magnesium- oder Aluminiumfluorid bestehen.

4. Dielektrischer Spiegel nach Anspruch 3, **dadurch gekennzeichnet, dass** die Anzahl der oxidischen Schichten in Abhängigkeit von der Wellenlänge der zu reflektierenden Strahlung zwischen 30 - 61 liegt.

5. Dielektrischer Spiegel nach Anspruch 4, **dadurch gekennzeichnet, dass** die Anzahl der fluoridischen Schichten in Abhängigkeit von der Wellenlänge der zu reflektierenden Strahlung 10 - 31 beträgt.

6. Verfahren zur Herstellung hochreflektierender dielektrischer Spiegel durch Abscheiden einer Folge von alternierenden hoch- und niedrigbrechenden dielektrischen Schichten auf einem optischen Substrat (1), deren optische Schichtdicken einen Spiegel bei vorgegebenen Wellenlängen ergeben, **dadurch gekennzeichnet, dass** für die Reflexion von ausgewählten Wellenlängen im Bereich von 170 nm bis 230 nm zunächst ein erster Stapel (A) von alternierenden hoch- und niedrigbrechenden oxidischen Schichten auf dem optischen Substrat (1) abgeschieden und danach ein zweiter Stapel (B) von alternierenden hoch- und niedrigbrechenden fluoridischen Schichten auf den ersten Stapel (A) aufgebracht wird, und dass in dem ersten Stapel (A) beim Abscheiden der Schichten dauerhaft verbleibende Druckspannungen in einer Größe erzeugt werden, die für eine Kompensation von Zugspannungen in den fluoridischen Schichten geeignet ist.

7. Verfahren nach Anspruch 6, **dadurch gekennzeichnet, dass** die Größe der Druckspannungen durch einen gesteuerten Ionenbeschuss des für die oxidischen Schichten vorgesehenen Materials beim Vakuumbedampfen des Substrats (1) erzeugt wird.

8. Verfahren nach Anspruch 6, **dadurch gekennzeichnet, dass** als optisches Substrat (1) Quarzglas dient, und dass als hochbrechende oxidische Schichten Aluminiumoxid, als niedrigbrechende oxidische Schichten Siliziumdioxid, als hochbrechende fluoridische Schichten Lanthanfluorid oder Gadoliniumfluorid und als niedrigbrechende fluoridische Schichten Magnesium- oder Aluminiumfluorid verwendet werden.

**Claims**

1. A high-reflective dielectric mirror which has on an optical substrate (1) a sequence of alternating high-refractive and low-refractive dielectric layers, whose optical layer thicknesses yield a mirror with predetermined wavelengths, **characterised in that** the dielectric layers form a first stack (A) of alternating high-refractive and low-refractive oxide layers and a second stack (B) of alternating high-refractive and low-refractive fluoride layers, of which the first stack (A) is applied onto the optical substrate (1), and the second stack (B) is applied onto the first stack (A), and that compressive stresses are present in the high-refractive layers as well as in the low refractive layers of the first stack (A), which serve to compensate for tensile stresses in the fluoride layers.

2. A dielectric mirror according to claim 1, **characterised in that** the oxide and the fluoride layers are constructed to reflect selected wavelengths in a range of 170 nm - 230 nm.

3. A dielectric mirror according to claim 2, **characterised in that** quartz glass serves as the optical substrate (1), that the high-refractive oxide layers are composed of aluminium oxide, and the low-refractive oxide layers are composed of silicon dioxide and that the high-refractive fluoride layers are composed of lanthanum fluoride or gadolinium fluoride, and the low-refractive fluoride layers are composed of magnesium fluoride or aluminium fluoride.

4. A dielectric mirror according to claim 3, **characterised in that** the number of oxide layers, depending on the wavelength of the radiation to be reflected, is between 30 and 61.

5. A dielectric mirror according to claim 4, **characterised in that** the number of fluoride layers depending on the wavelength of the radiation to be reflected is 10-31.

6. A method for the production of high-reflective dielectric mirrors by deposition of a sequence of alternating high-refractive and low-refractive dielectric layers onto an optical substrate (1) whose optical layer thicknesses yield a mirror with predetermined wavelengths, **characterised in that** for the reflection of selected wavelengths in the range of 170 nm - 230 nm, a first stack (A) of alternating high-refractive and low-refractive oxide layers is initially deposited onto the optical substrate (1) and afterwards, a second stack (B) of alternating high-refractive and low-refractive fluoride layers is applied onto the first stack (A), and that in the first stack (A) permanent compressive stresses are created during the deposition of the layers of a magnitude that is suited to compensate for tensile stresses in the fluoride layers.

7. A method according to claim 6, **characterised in that** the magnitude of the compressive stresses is created by a controlled ion bombardment of the material provided for the oxide layers during vacuum deposition of the substrate (1).

8. A method according to claim 6, **characterised in that** quartz glass serves as an optical substrate (1), and that aluminium oxide is used as the high-refractive oxide layers, silicon dioxide is used as the low refractive oxide layers, lanthanum fluoride or gadolinium fluoride is used as the high-refractive fluoride layers, and magnesium fluoride or aluminium fluoride is used as the low refractive fluoride layers.

## Revendications

1. Miroir diélectrique à haute réflectivité, qui présente sur un substrat optique (1) une suite de couches diélectriques hautement réfringentes et faiblement réfringentes alternées dont les épaisseurs de couches optiques donnent un miroir à des longueurs d'onde prédéterminées, **caractérisé en ce que** les couches diélectriques forment un premier empilage (A) de couches oxydiques hautement réfringentes et faiblement réfringentes alternées et un deuxième empilage (B) de couches fluorurées hautement réfringentes et faiblement réfringentes alternées, le premier empilage (A) étant déposé sur le substrat optique (1) et le deuxième empilage (B) déposé sur le premier empilage (A), et **en ce que** des contraintes de pression qui servent à compenser les contraintes de traction dans les couches fluorurées sont présentes aussi bien dans les couches hautement réfringentes que dans les couches faiblement réfringentes du premier empilage (A).

2. Miroir diélectrique selon la revendication 1, **caractérisé en ce que** les couches oxydiques et fluorurées sont configurées pour réfléchir des longueurs d'onde choisies dans une plage de 170 nm à 230 nm.

3. Miroir diélectrique selon la revendication 2, **caractérisé en ce que** du verre de quartz sert de substrat optique (1), **en ce que** les couches oxydiques hautement réfringentes sont en oxyde d'aluminium et les couches oxydiques faiblement réfringentes en dioxyde de silicium, et **en ce que** les couches fluorurées hautement réfringentes sont en fluorure de lanthane ou en fluorure de gadolinium et les couches fluorurées faiblement réfringentes sont en fluorure de magnésium ou d'aluminium.

4. Miroir diélectrique selon la revendication 3, **caractérisé en ce que** le nombre des couches oxydiques va de 30 à 61 en fonction de la longueur d'onde du rayonnement à réfléchir.

**5.** Miroir diélectrique selon la revendication 4, **caractérisé en ce que** le nombre des couches fluorurées va de 10 à 31 en fonction de la longueur d'onde du rayonnement à réfléchir.

**6.** Procédé de fabrication de miroirs diélectriques à haute réflectivité en déposant sur un substrat optique une suite de couches diélectriques hautement réfringentes et faiblement réfringentes alternées dont les épaisseurs de couches optiques donnent un miroir à des longueurs d'onde prédéterminées, **caractérisé en ce que**, pour réfléchir des longueurs d'onde choisies dans la plage de 170 nm à 230 nm, on dépose tout d'abord un premier empilage (A) de couches oxydiques hautement réfringentes et faiblement réfringentes alternées sur le substrat optique (1) et ensuite un deuxième empilage (B) de couches fluorurées hautement réfringentes et faiblement réfringentes alternées sur le premier empilage (A), et **en ce que**, dans le premier empilage (A), des contraintes de pression permanentes dont la valeur est adéquate pour compenser des contraintes de traction dans les couches fluorurées sont générées lors du dépôt des couches.

**7.** Procédé selon la revendication 6, **caractérisé en ce que** la valeur des contraintes de pression est générée par un bombardement ionique ciblé du matériau prévu pour les couches oxydiques lors de la métallisation sous vide du substrat (1).

**8.** Procédé selon la revendication 6, **caractérisé en ce que** du verre de quartz sert de substrat optique (1) et **en ce que** de l'oxyde d'aluminium est utilisé pour les couches oxydiques hautement réfringentes et du dioxyde de silicium pour les couches oxydiques faiblement réfringentes, et du fluorure de lanthane ou du fluorure de gadolinium est utilisé pour les couches fluorurées hautement réfringentes et du fluorure de magnésium ou d'aluminium pour les couches fluorurées faiblement réfringentes.

| MgF$_2$ oder AlF$_3$ | |
|---|---|
| LaF$_3$ oder GdF$_3$ | B |
| MgF$_2$ oder AlF$_3$ | |
| | |
| LaF$_3$ oder GdF$_3$ | |
| MgF$_2$ oder AlF$_3$ | |
| LaF$_3$ oder GdF$_3$ | |
| MgF$_2$ oder AlF$_3$ | |
| Al$_2$O$_3$ oder LaF$_3$ oder GdF$_3$ | |
| SiO$_2$ | |
| Al$_2$O$_3$ | A |
| | |
| Al$_2$O$_3$ | |
| SiO$_2$ | |
| Al$_2$O$_3$ | |
| SiO$_2$ | |
| Al$_2$O$_3$ | |

1

Fig. 1

## Spiegel für 193nm senkrechter Einfall

Fig. 2

## Spiegel für 193nm 45° Einfallswinkel

Fig. 3

## Spiegel für 193nm 75° Einfallswinkel

Fig. 4

Brechzahlen im Bereich 170 - 230 nm

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0372438 A2
- EP 0280299 B1
- JP 8254612 A
- JP 2182447 A
- US 6574039 B1